# EUROPEAN PATENT APPLICATION

(11) **EP 1 840 601 A1**
(43) Date of publication of application: **03.10.2007**
(21) Application number: 07251339.3
(22) Date of filing: 28.03.2007
(51) Int. Cl.: G02B 5/20, H01J 17/49

(54) **Filter assembly for display panel and display apparatus comprising the same**

(30) Priority: 28.03.2006 KR 20060028051
(71) Applicant: Samsung SDI Co., Ltd., Suwon-si, Gyeonggi-do (KR)
(72) Inventor: Kim, Ji-Suk, c/o Samsung SDI Co. Ltd., Suwon-si, Gyeonggi-do (KR)
(74) Representative: Mounteney, Simon James

(57) **Abstract**

A filter assembly (10;20) includes a film type filter (17;27) with a base film (13;23) and a plurality of light absorption pattern units (11;21) thereon, and an adhesion pattern layer (15;25) attached to the film type filter. The adhesion pattern layer may include a plurality of protrusions, each having a convex lens shape, arranged in a zigzag structure with respect to the light absorption pattern units of the film type filter.

## Description

### BACKGROUND OF THE INVENTION

### 1. Field of the Invention

The present invention relates to a filter and a plasma display panel employing the same. In particular, the present invention relates to a filter capable of enhancing brightness in a plasma display device.

### 2. Description of the Related Art

In general, plasma display panels (PDPs) refer to flat panel display devices capable of displaying images using gas discharge phenomenon, thereby providing superior display characteristics, such as high brightness and contrast, clear latent images, wide viewing angle, thin/large screen size, and so forth, as compared to conventional display devices.

The conventional PDP may include a filter with a plurality of thin layers. The conventional filter may be attached to a front substrate of the PDP to control external light transmittance therethrough in order to reduce light reflection and, thereby, improve image quality and clarity of the PDP. The conventional filter, e.g., a tempered glass filter, may be formed to a uniform thickness of about 3 mm of a different material than the front substrate of the PDP.

However, the thickness of the tempered glass filter may significantly increase the weight and manufacturing costs of the conventional PDP. More importantly, the difference in materials employed to form the tempered glass filter and the front substrate of the PDP may generate a dual reflection due to refraction, thereby decreasing the image quality of the PDP. Additionally, the conventional tempered glass filter may exhibit insufficient bright room contrast and require a complex manufacturing method due to a complicated structure, i.e., combined layers performing various functions, thereof.

Accordingly, there exists a need to provide a filter for a PDP capable of minimizing external light reflection and increasing brightness of the PDP.

### SUMMARY OF THE INVENTION

The present invention is therefore directed to a filter assembly and a plasma display panel (PDP) which substantially overcome one or more of the disadvantages of the related art.

It is therefore a feature of an embodiment of the present invention to provide a filter assembly capable of preventing dual reflection of internal light, while increasing brightness.

It is another feature of an embodiment of the present invention to provide a filter having reduced weight.

It is yet another feature of an embodiment of the present invention to provide a PDP having a filter assembly exhibiting one or more of the above features.

According to a first aspect of the invention, there is provided a filter assembly as set out in Claim 1. Optional features of this aspect are set out in Claims 2 to 16.

According to a second aspect of the invention, there is provided a display device as set out in Claim 17. Optional features of this aspect are set out in Claim 18. In a particular embodiment of this aspect of the present invention, there is provided a plasma display device, including a plasma display panel (PDP) having front and rear panels, a chassis base on the rear surface of the plasma display panel, a plurality of driving circuits on a rear surface of the chassis base and electrically connected to the PDP, and a filter assembly on a front panel of the PDP, wherein the filter assembly includes an adhesion pattern layer, a base film, and a plurality of light absorption pattern units on the base film.

### BRIEF DESCRIPTION OF THE DRAWINGS

The above and other features and advantages of the present invention will become more apparent to those of ordinary skill in the art by describing in detail exemplary embodiments thereof with reference to the attached drawings, in which:
FIG. 1 illustrates a partial cross-sectional view of a filter assembly according to an embodiment of the present invention;
FIG. 2 illustrates a perspective view of the filter assembly illustrated in FIG. 1;
FIG. 3 illustrates a vertically inverted view of the filter assembly illustrated in FIG. 2;
FIG. 4 illustrates a cross-sectional view showing the optical mechanism of the filter assembly illustrated in FIG. 1;
FIG. 5 illustrates a partial cross-sectional view of a filter assembly according to another embodiment of the present invention;
FIG. 6 illustrates a perspective exploded view of a PDP incorporating the filter assembly illustrated in FIG.1; and
FIG. 7 illustrates a cross-sectional view taken along line VII-VII of FIG. 6.

### DETAILED DESCRIPTION OF THE INVENTION

The present invention will now be described more fully hereinafter with reference to the accompanying drawings, in which exemplary embodiments of the invention are illustrated. The invention may, however, be embodied in different forms and should not be construed as limited to the embodiments set forth herein. Rather, these embodiments are provided so that this disclosure will be thorough and complete, and will fully convey the scope of the invention to those skilled in the art.

In the figures, the dimensions of layers and regions may be exaggerated for clarity of illustration. It will also be understood that when a layer or element is referred to as being "on" another layer or substrate, it may be directly on the other layer or substrate, or intervening layers may also be present. Further, it will be understood that when a layer is referred to as being "under" another layer, it may be directly under, or one or more intervening layers may also be present. In addition, it will also be understood that when a layer is referred to as being "between" two layers, it may be the only layer between the two layers, or one or more intervening layers may also be present. Like reference numerals refer to like elements throughout.

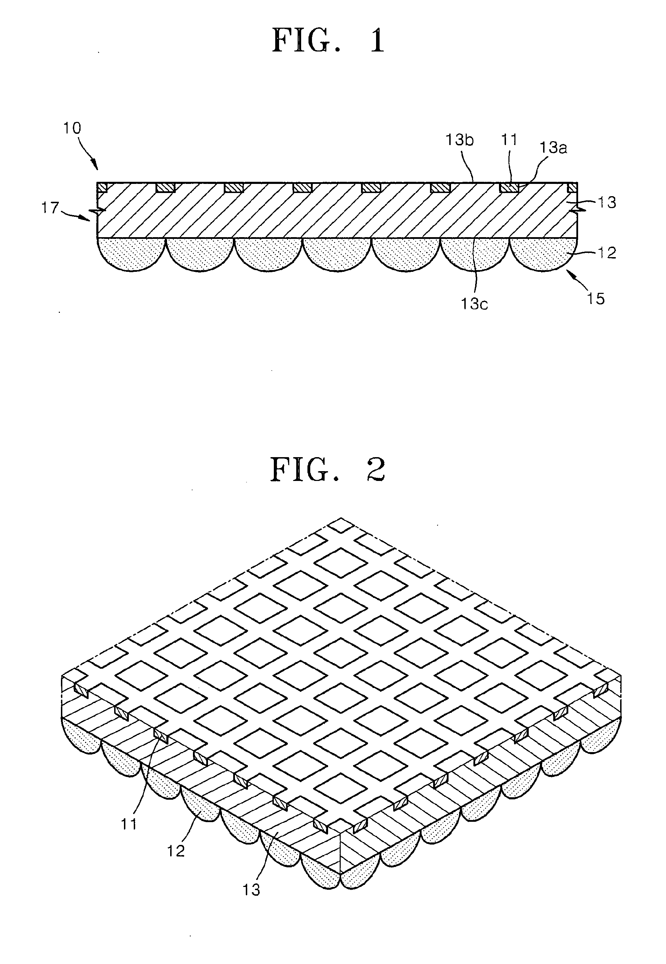

An exemplary embodiment of a filter according to the present invention will now be described more fully below with reference to FIGS. 1-3. As illustrated in FIG. 1, a filter assembly 10 according to an embodiment of the present invention includes a film type filter 17 and an adhesion pattern layer 15. The film type filter 17 includes a base film 13 and a plurality of light absorption pattern units 11 formed on the base film 13.

The base film 13 of the film type filter 17 has a planar shape and includes a plurality of grooves 13a formed in a front surface 13b of the base film 13 in a predetermined pattern, such as a matrix, e.g., a grid. The base film 13 may be formed of a flexible material capable of transmitting visible light, e.g., polyethersulphone (PES), polyacrylate (PAR), polyetherimide (PEI), polyethylene naphthalate (PEN), polyethylene terephthalate (PET), polyphenylene sulfide (PPS), polyallylate, polyimide, polycarbonate (PC), cellulose tri-acetate (TAC), or cellulose acetate propionate (CAP). The base film 13 may also include a material capable of shielding near infrared or neon light.

The base film 13 may also include a material for color correction. The base film 13 may have a predetermined color to facilitate control of light transmission through the filter assembly 10, i.e., control via color adjustment of the base film 13. For example, formation of the base film 13 in a dark color may reduce light transmission through the filter assembly 10.

The light absorption pattern units 11 of the film type filter 17 are formed on the base film 13. In particular, the light absorption pattern units 11 are disposed in the grooves 13a of the base film 13 in a matrix pattern, e.g., a grid, as illustrated in FIG. 2. The light absorption pattern units 11 may be formed of a dark metal, e.g., silver (Ag), nickel (Ni), copper (Cu), chromium (Cr), or a like metal, such that external light may be absorbed therein, thereby reducing light reflection.

The adhesion pattern layer 15 of the filter assembly 10 according to this embodiment of the present invention is formed on a rear surface 13c of the base film 13. In particular, the adhesion pattern layer 15 is formed on predetermined portions of the base film 13 in order to attach the base film 13 to a PDP (not shown), i.e., the adhesion pattern 15 is positioned between the base film 13 and a PDP substrate to connect therebetween.

The adhesion pattern layer 15 may be formed of acrylics, silicon-based compounds, urethanes, polyesters, or mixtures thereof. The adhesion pattern layer 15 may include a material that absorbs near infrared rays, e.g., a copper-based compound, a tungsten-based compound, a phosphorous-based compound, a cyanic-based compound, and so forth. In addition, the adhesion pattern layer 15 may include a material capable of adjusting colors by blocking neon lights.

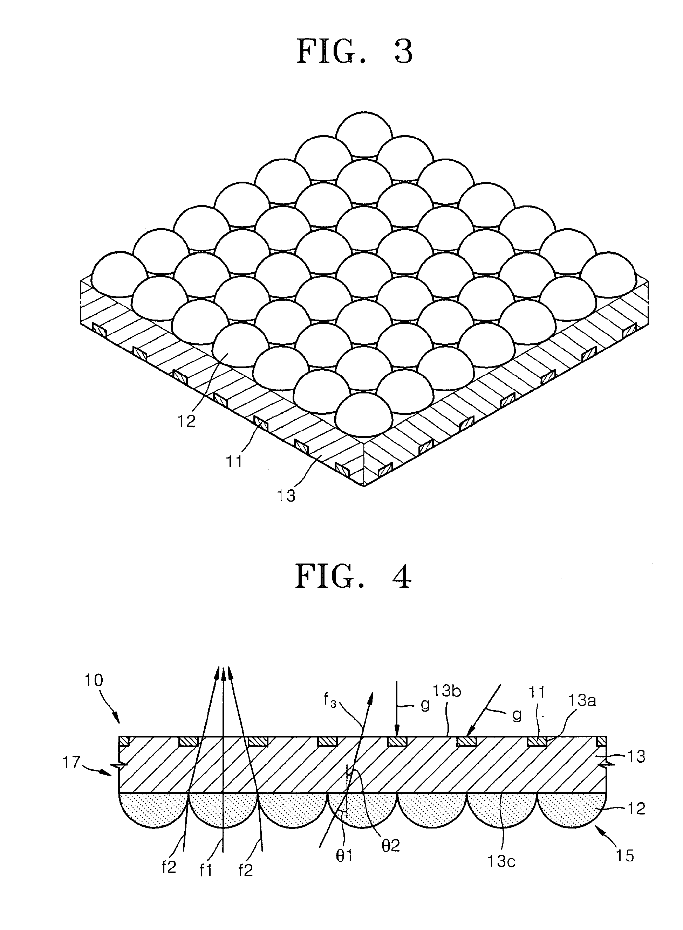

In this embodiment, the adhesion pattern layer 15 includes a plurality of protrusions 12 in communication with the rear surface 13c of the base film 13 which extend perpendicularly therefrom in order to attach the adhesion pattern layer 15 to a PDP. The protrusions 12 are arranged in a predetermined pattern, e.g., a matrix pattern, such that two to four protrusions 12 may be disposed against every discharge cell corresponding to a sub-pixel of the PDP. More specifically, each of the protrusions 12 has a convex lens shape, e.g., a semispherical protrusion with a circular cross-section, as illustrated in FIG. 3, such that a flat portion of each protrusion 12 is in communication with the base film 13, and a curved portion of each protrusion 12 is in communication with the PDP. It should be noted, however, that other shapes, sizes and quantities of the protrusions 12 are not excluded from the scope of the present invention.

The protrusions 12 are disposed in a zigzag structure with respect to the light absorption pattern units 11. In other words, the light absorption pattern units 11 are shifted along a horizontal direction with respect to the protrusions 12, such that each light absorption pattern unit 11 is horizontally aligned between two protrusions 12, as illustrated in FIG. 1, in order to minimize overlap between the light absorption pattern units 11 and the protrusions 12. Such minimized overlap may facilitate control over light reflection, i.e., blocking reflection of light, and increase brightness of the PDP light, as will be discussed in more detail below with respect to FIG. 4.

The adhesion pattern layer 15 may have a refractive index that is lower than the refractive index of the base film 13. In particular, the refractive index of the base film 13 may be in the range of about 1.4 to about 1.6, while the refractive index of the adhesion pattern layer 15 may be in the range of about 1.2 to about 1.5.

The optical mechanism of the filter assembly 10 according to the embodiment of the present invention shown in FIGS. 1-3, i.e., the light reflection and transmittance through the filter assembly 10, will be described below in greater detail with respect to FIG. 4. It should be noted that in the explanation below the first interface, corresponding to rear surface 13c, refers to an interface between the protrusions 12 of the adhesion pattern layer 15 and the base film 13 of the film type filter 17. Similarly, the second interface, corresponding to the front surface 13b, refers to an interface between the base film 13 of the film type filter 17 and the exterior.

Light generated in the PDP may be largely categorized into straight light and diffused light. Straight light enters the filter assembly 10 substantially perpendicularly, while diffused light enters the filter assembly 10 at an oblique angle. For example, a first straight light ray f1 may enter the filter assembly 10 perpendicularly through a protrusion 12, i.e., perpendicularly to the first interface 13c, and emerge from the filter assembly 10 without being refracted, i.e., perpendicularly to the second interface 13b. In another example, a second substantially straight light ray f2 may enter the filter assembly 10 at an edge of a protrusion 12, i.e., at an intersection point of two protrusions 12 and the first interface 13c, and be refracted at the first interface 13c and the second interface 13b to emerge from the filter assembly 10 at a predetermined angle with respect to the second interface 13b.

In yet another example, a diffused light ray f3 may enter the filter assembly 10 through a protrusion 12 at an oblique angle with respect to a normal to the protrusion 12 and be refracted three times, i.e., refracted in the protrusion 12 at an angle θ1 with respect to a normal to the first interface 13c, refracted in the base film 13 at an angle θ2 with respect to a normal to the first interface 13c, and refracted at the second interface 13b to emerge from the filter assembly 10 at a predetermined angle with respect to the second interface 13b, as illustrated in FIG. 4. A higher refractive index of the base film 13 as compared to the refractive index of the protrusions 12 may provide a larger incidence angle of the diffused light ray f3 refracted in the protrusion 12, i.e. angle θ1, as compared to an emergence angle of the diffused light ray f3 refracted in the base film 13, i.e., angle θ2. The refraction of the diffused light ray f3 may facilitate emergence thereof through the second interface 13b at a point between the light absorption pattern units 11.

In this respect, it should be noted that the points of emergence of the second substantially straight light ray f2 and the diffused light ray f3 through the second interface 13b may be adjusted due to the zigzag structure of the light absorption pattern units 11 and the protrusions 12 described above. In particular, minimized overlap between the light absorption pattern units 11 and the protrusions 12 may facilitate emergence of the light ray f2 and the diffused light ray f3 through the second interface 13b between the grooves 13a, i.e., between the light absorption pattern units 11. Emergence of the second substantially straight light ray f2 and the diffused light ray f3 between the light absorption pattern units 11 minimizes absorption thereof in the light absorption pattern units 11 and, thereby, maximizes the amount of light emerging through the second interface 13b. An increase in the amount of light emerging through the second interface 13b may increase the overall brightness of the PDP.

Without intending to be bound by theory, it is believed that the structure of the filter assembly 10 according to an embodiment of the present invention is advantageous in providing a zigzag configuration of the protrusions 12 and the light absorption pattern units 11, thereby enabling focus of the light rays generated in the PDP, e.g., light rays f1, f2 and f3, while minimizing absorption thereof in the light absorption pattern units 11. In this respect, it should be noted that while absorption of light generated by the PDP is minimized due to the inventive structure described above, external light g incident on the base film 13 may be absorbed in the light absorption pattern units 11, as illustrated in FIG. 4, thereby reducing external light reflection.

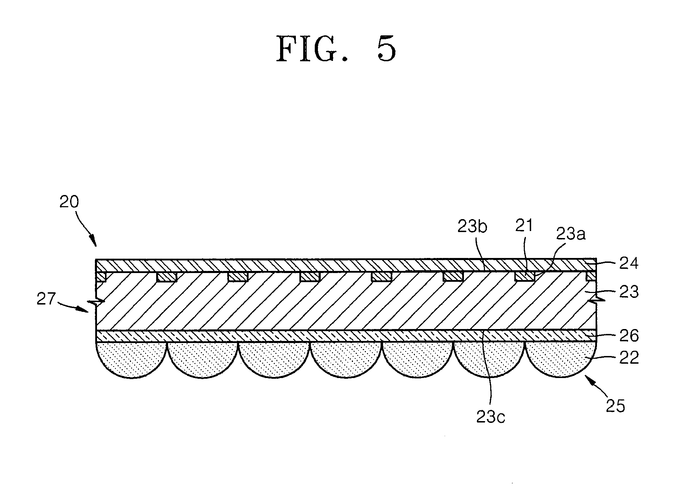

According to another embodiment of the present invention, a filter assembly 20, illustrated in FIG. 5, is similar to the filter assembly 10 described previously with respect to FIGS. 1-3, with the exception that the filter assembly 20 includes a film type filter 27 having a base film 23, a plurality of grooves 23a, a plurality of light absorption pattern units 21, an external light reflection blocking film 24, and an electromagnetic shielding layer 26. The base film 23, plurality of grooves 23a, and plurality of light absorption pattern units 21 of the film type filter 27 may be similar to the base film 13, plurality of grooves 13a, and plurality of light absorption pattern units 11 of the film type filter 17 described previously with respect to FIGS. 1-3, and therefore, their detailed structure and operation will not be repeated herein.

The external light reflection blocking film 24 of the film type filter 27 is formed on a front surface 23b of the base film 23. The external light reflection blocking film 24 may be an antiglare layer, a reflection blocking layer, a neon light blocking layer, a near infrared light blocking layer, a color adjustment layer, or a combination thereof to facilitate blocking of external light reflection.

The electromagnetic shielding layer 26 of the film type filter 27 may be formed on a rear surface 23c of the base film 23 by depositing a metal or a metal oxide material thereon. Additionally, the electromagnetic shielding layer 26 may include a mesh formed of conductive metal. The electromagnetic shielding layer 26 may minimize transmission of electromagnetic waves generated in the PDP to the outside of the PDP.

The filter assembly 20 also includes an adhesion pattern layer 25 formed in communication with the electromagnetic shielding layer 26, i.e., the electromagnetic shielding layer 26 is disposed between the base film 23 and the adhesion pattern layer 25. However, the structure and operation of the adhesion pattern layer 25 is similar to the structure and operation of the adhesion patter layer 15 of the filter assembly 10 described previously with reference to FIGS. 1-3, especially with respect to a zigzag structure of its protrusions 22 and their refraction indexes, and therefore, its description will not be repeated herein.

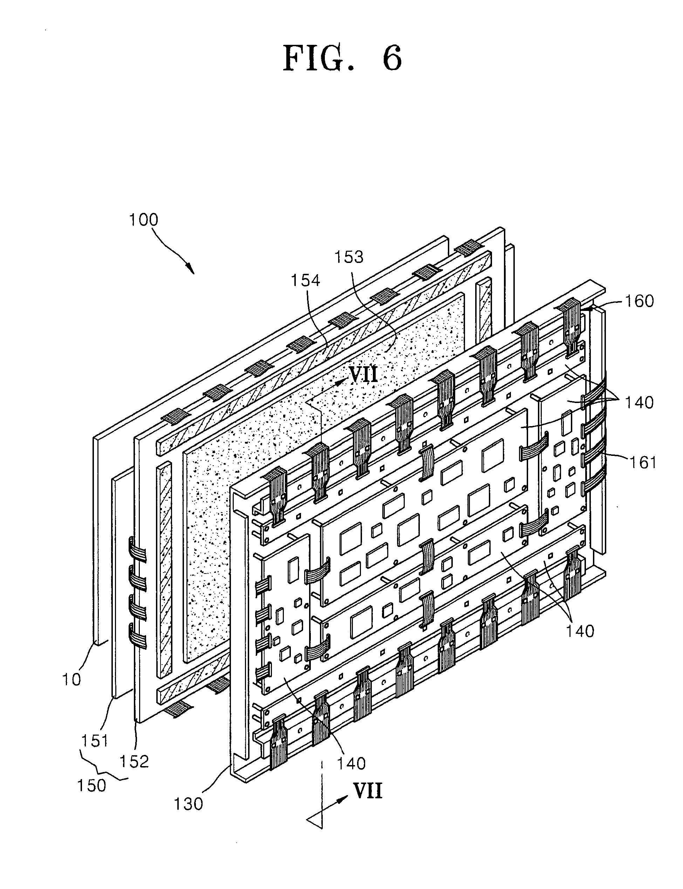

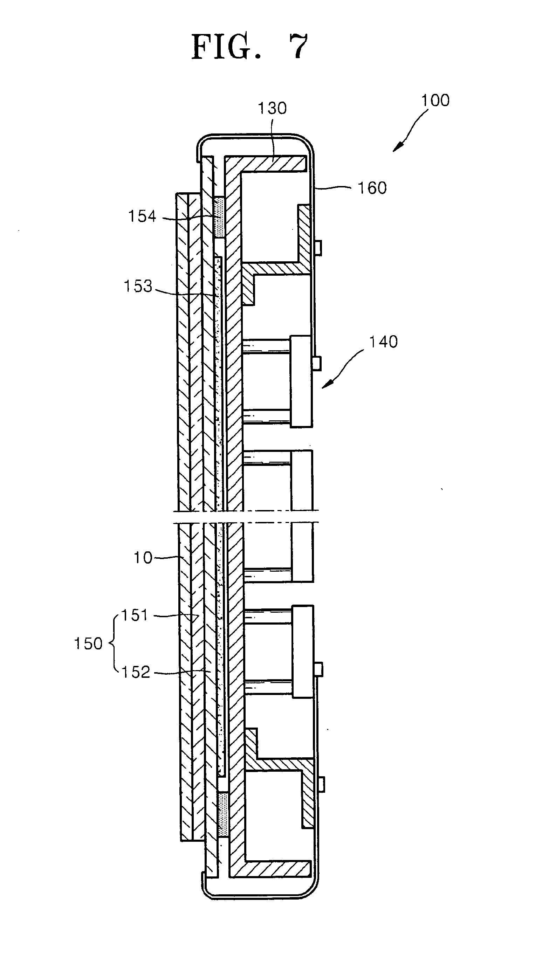

According to yet another embodiment of the present invention, a plasma display device 100, illustrated in FIGS. 6-7, includes the filter assembly 10 as described previously with respect to FIGS. 1-3. In particular, the plasma display device 100 includes a PDP 150 with a front panel 151 and a rear panel 152 attached to one another, a chassis 130, a plurality of circuit boards 140, and the filter assembly 10. It should be noted, however, that even though the plasma display device 100 is described in connection with the filter assembly 10, other types of filters, e.g., the filter assembly 20, are not excluded from the scope of the present invention.

The filter assembly 10 is attached to the front panel 151 of the PDP 150 via the adhesion pattern layer 15. Attachment of the filter assembly 10 to the PDP 150 may reduce double reflection of images therein. Additionally, employing the filter assembly 10 with the PDP 150 may reduce weight and manufacturing costs as compared to a conventional PDP with an enhanced glass filter.

The chassis 130 is attached to the rear panel 152 of the PDP 150 to provide structural support thereto. The chassis 130 may be formed of a rigid metal, e.g., aluminum, iron, or a like metal, or of plastic.

The plurality of circuit boards 140 are disposed on a rear surface of the chassis 130, i.e., such that the chassis 130 is positioned between the PDP 150 and the circuit boards 140, to drive the PDP 150. In particular, the circuit boards 140 may transmit electrical signals to the PDP 150 by any suitable signal transmission means as determined by one of ordinary skill in the art, e.g., a flexible printed cable (FPC), a tape carrier package (TCP), a chip on film (COF), and so forth. For example, the plasma display device 100 according to an embodiment of the present invention includes a plurality of FPCs 161 disposed at each vertical side of the chassis 130 and a plurality of TCPs 160 disposed at each horizontal side, i.e., an upper portion and a lower portion, of the chassis 130 as a signal transmission means.

The plasma display device 100 according to this embodiment of the present invention also includes a thermally conductive material 153 and a double-sided tape 154 to facilitate attachment of the PDP 150 to the chassis 130. The thermally conductive material 153 is disposed on the rear panel 152 of the PDP 150. i.e., between the PDP 150 and the chassis 130, and the double-sided tape 154 is disposed on the rear panel 152 of the PDP 150 to surround the thermally conductive material 153.

In the filter assembly and the plasma display device including the same according to embodiments of the present invention, the filter assembly may be attached directly to a front panel of the PDP, thereby reducing image double reflection and enhancing luminance thereof. In addition, the filter assembly may be formed using a relatively thin base film, thereby decreasing the weight and manufacturing cost thereof.

Exemplary embodiments of the present invention have been disclosed herein, and although specific terms are employed, they are used and are to be interpreted in a generic and descriptive sense only and not for purpose of limitation. Accordingly, it will be understood by those of ordinary skill in the art that various changes in form and details may be made without departing from the scope of the present invention as set forth in the following claims.

## Claims

1. A filter assembly, comprising:
a base film;
a plurality of light absorption pattern units on the base film; and
an adhesion pattern layer attached to a rear surface of the base film.

2. A filter assembly according to claim 1, wherein the adhesion pattern layer includes a plurality of protrusions.

3. A filter assembly according to claim 2, wherein each protrusion has a convex lens shape.

4. A filter assembly according to claim 2 or 3, wherein the plurality of protrusions has a matrix structure.

5. A filter assembly according to any preceding claim, wherein the base film has a higher refractive index than the refractive index of the adhesion pattern layer.

6. A filter assembly according to claim 5, wherein the refractive index of the base film is about 1.4 to about 1.6.

7. A filter assembly according to claim 5 or 6, wherein the refractive index of the adhesion pattern layer is about 1.2 to about 1.5.

8. A filter assembly according to any preceding claim, wherein the adhesion pattern layer comprises an acrylic compound, a silicon-based compound, a urethane, a polyester, or a combination thereof.

9. A filter assembly according to any preceding claim, wherein the plurality of light absorption pattern units are on a front surface of the base film.

10. A filter assembly according to claim 9, wherein the light absorption pattern units are disposed in a plurality of grooves on a front surface of the base film.

11. A filter assembly according to any preceding claim, wherein the light absorption pattern units are dark-colored.

12. A filter assembly according to claim 2 or any preceding claim when dependent on claim 2, wherein the protrusions and the light absorption pattern units are disposed in a zigzag structure.

13. A filter assembly according to claim 12, wherein the light absorption pattern units have a matrix pattern structure.

14. A filter assembly according to claim 13, wherein the light absorption pattern units have a grid structure.

15. A filter assembly according to any preceding claim, further comprising an electromagnetic shielding layer on a rear surface of the base film.

16. A display device, comprising:
a display panel; and
a filter assembly according to any of claims 1 to 15.

17. A display device according to claim 16, wherein the adhesion pattern layer of the filter assembly includes a plurality of protrusions having a convex lens shape and the convex portion of each protrusion in the adhesion pattern layer is arranged in communication with a front surface of the display panel.
